# FASCICULE DE BREVET EUROPEEN

(11) **EP 2 689 110 B1**
(45) Date de publication et mention de la délivrance du brevet: **03.01.2018**
(21) Numéro de dépôt: 12714750.2
(22) Date de dépôt: 06.03.2012
(51) Int. Cl.: F01D 21/00, F02B 77/00, F16B 39/24

(54) **DISPOSITIF D'OBTURATION A VERROUILLAGE AUTO-ACTIVABLE**
ABSPERRVORRICHTUNG MIT AUTOMATISCH AKTIVIERBARER VERRIEGELUNG
SHUT-OFF DEVICE WITH AUTOMATICALLY ACTIVATABLE LOCKING

(30) Priorité: 21.03.2011 FR 1152310
(43) Date de publication de la demande: 29.01.2014
(73) Titulaire: JPB Système, 77170 Brie-Comte-Robert (FR)
(72) Inventeur: MARC, Damien, Jacky, F-77370 Nangis (FR)
(74) Mandataire: Pontet Allano & Associes
(86) Numéro de dépôt international: PCT/FR2012/050463
(87) Numéro de publication internationale: WO 2012/127146

(56) Documents cités:
- WO-A1-96/02766
- WO-A1-96/14516
- FR-A1- 2 857 080
- JPB systeme: "Bouchon endoscope auto-freiné JPB SYSTEME", JPB systeme n/a, vol. n/a, no. n/a, N/A, 19 février 2009 (2009-02-19), pages N/A-n/a, XP002661539, n/a Extrait de l'Internet: URL:http://www.youtube.com/watch?v=jPrryIL yV9c [extrait le 2011-10-14]

## Description

La présente invention concerne un dispositif d'obturation à bouchon dont le vissage permet un verrouillage automatique empêchant le dévissage spontané ou intempestif.

En aéronautique, un moteur d'avion nécessite un entretien régulier et des visites d'inspection très rigoureuses, afin d'assurer une parfaite fiabilité du moteur lors de son fonctionnement. Pour pouvoir contrôler les pièces internes ainsi que leur usure éventuelle, des orifices sont prévus dans le carter du moteur. Lors des opérations de maintenance, un bouchon obturant l'orifice est dévissé et un endoscope peut être enfilé pour l'exploration des cavités internes et l'observation de l'état des pièces du moteur. On évite ainsi l'ouverture du carter et le démontage complet du moteur.

Les bouchons de ce genre, également appelés "bouchons endoscopes", habituellement utilisés possèdent un filetage et ils se vissent à l'aide d'une clef dynamométrique sur le carter comportant un filetage correspondant. Lorsque le moteur tourne, son fonctionnement génère des vibrations pouvant provoquer le desserrage des pièces vissées et plus particulièrement le desserrage des bouchons endoscopes.

On connaît certes différents moyens pour éviter une telle avarie. Ces moyens peuvent consister à placer une pièce rapportée en contact avec le bouchon, avant ou après le serrage. Les pièces utilisées sont du type rondelle de freinage, ou du type goupille ou fil de verrouillage.

Toutefois, l'accessibilité des bouchons dans un moteur peut être très mauvaise, car des tubulures et autres organes périphériques viennent encombrer l'espace autour du carter. Ainsi, la mise en place d'une pièce supplémentaire de freinage ou de verrouillage sur un bouchon demande une grande dextérité et même de la chance pour éviter de perdre ladite pièce. Dans certains cas, le bouchon n'est accessible qu'à l'aide d'un long outil, tout accès manuel direct au bouchon est même impossible lorsque le bouchon est en place. On connaît aussi via le document PCT/FR95/01461 un bouchon pourvu d'un système de freinage traitant ce type de problème. Un tel système comporte des moyens de verrouillage et de déverrouillage activés automatiquement par la rotation du bouchon et sa progression longitudinale suivant l'axe de rotation. Les moyens de verrouillage et de déverrouillage sont constitués de deux couronnes (ou coupelles) comportant chacune une série de dents dirigées axialement vers l'autre couronne. Les dents ont un profil en pointe (ou en triangle) et s'interpénètrent mutuellement lors de la progression axiale du bouchon. L'une des couronnes est fixée sur le carter, dans le cas d'espèce montée en force sur ce dernier de manière à être immobilisée en rotation. L'autre couronne est intégrée au bouchon et est entraînée en rotation avec ce dernier lors de son vissage dans l'orifice du carter. Ce bouchon connu nécessite l'adaptation d'une couronne sur le carter, par un montage en force. Cette intervention requiert un outillage spécifique.

On observe notamment que l'accouplement rotatif réalisé entre l'une des couronnes et le bouchon est obtenu par des conformations de formes conjuguées réalisées d'une part sur cette couronne et d'autre part sur le corps central du bouchon. Dans le cas du dispositif décrit dans ce document, la couronne comporte des clavettes pénétrant axialement par rapport à la direction de vissage dans des rainures correspondantes conformées sur le corps central du bouchon, ces clavettes étant mobiles suivant cet axe longitudinal. En variante, on connaît des dispositifs analogues dans lesquels la couronne est accouplée sur la périphérie du corps central, par un système de méplats. Ces systèmes nécessitent tous un usinage particulier du corps central, ce qui peut dans certains cas l'affaiblir mécaniquement et/ou ne pas être adapté à la recherche d'un bouchon compact (peu encombrant) et optimisé.

En outre, le bouchon décrit dans ce document comporte des moyens (ressort hélicoïdal de compression repoussant la couronne intégrée au bouchon en direction de la couronne du carter, profils des dents asymétriques conformées sur les couronnes, etc.), qui bien que répondant déjà au problème du dévissage intempestif, peuvent encore être optimisés par leur forme et leur fonction.

Le but de la présente invention est de proposer une variante optimisée du bouchon tel que décrit précédemment, répondant encore plus efficacement au besoin de parer le dévissage intempestif tout en simplifiant les contraintes de fabrication et de montage du bouchon. Le but de l'invention est donc également de proposer un dispositif d'obturation comportant un système d'arrêt, s'opposant à tout dévissage intempestif sous l'effet des vibrations produites notamment par un moteur d'avion, qui soit directement intégré au dispositif d'obturation, parfaitement compact, et qui ne soit pas une gêne ou un risque pour les manoeuvres d'ouverture et de fermeture, même en cas de mauvaise accessibilité.

A cet effet, l'invention a pour objet un dispositif d'obturation comportant un bouchon destiné à être placé sur un orifice fileté d'un carter, ou à en être enlevé, respectivement par vissage et dévissage, le bouchon comprenant un corps central portant un filetage, et des moyens de verrouillage et de déverrouillage s'opposant au dévissage spontané du bouchon, activés automatiquement par la rotation du bouchon et sa progression correspondante dans la direction de vissage suivant un axe longitudinal, les moyens de verrouillage et de déverrouillage comprenant deux organes d'accouplement libérable, dont un premier organe est accouplé en rotation avec le corps central et un second organe est immobilisable en rotation par rapport au carter lors du vissage, caractérisé en ce que le bouchon comporte une jupe rigidement liée au corps central ayant une zone d'appui apte à coopérer directement avec une zone d'appui correspondante du second organe, et en ce que le premier organe est accouplé en rotation avec la jupe via des moyens de guidage conformés en périphérie du premier organe et s'étendant radialement par rapport à l'axe longitudinal, ces moyens de guidage pénétrant dans des rainures de forme conjuguée conformées à l'intérieur de la jupe, qui s'étendent suivant l'axe longitudinal de manière à permettre le déplacement du premier organe à l'intérieur de la jupe, suivant l'axe longitudinal.

Le corps central du bouchon peut ainsi avoir un profil extérieur cylindrique ne nécessitant aucun usinage spécifique à l'entraînement rotatif du premier organe avec le bouchon. Les moyens d'entraînement rotatif (ou d'accouplement) sont dans l'invention localisés entre le premier organe et la jupe qui est elle-même rigidement solidaire du corps central. Le profil parfaitement cylindrique du corps central permet un guidage direct des moyens de rappel sur ce corps central. Le dimensionnement du corps central peut être augmenté, notamment son diamètre, tout en conservant un encombrement extérieur identique du bouchon. En outre la couronne accouplée en rotation avec le bouchon est extrêmement compacte puisque dépourvue de clavette longitudinale ou de méplat interne.

Selon d'autres caractéristiques avantageuses de l'invention, les moyens de guidage sont constitués d'au moins deux reliefs angulairement répartis à la périphérie du second organe, en particulier de façon diamétralement opposée, chaque relief étant délimité, d'une part radialement par un profil cylindrique extérieur de diamètre supérieur à la surface cylindrique extérieure du premier organe, et d'autre part angulairement par des bords longitudinaux inscrits dans des plans formant un secteur angulaire autour de l'axe longitudinal.

De cette façon la répartition des efforts est optimale : pendant le montage ou le démontage, les efforts sont ainsi toujours orientés perpendiculairement à une droite passant par l'axe longitudinal du premier organe. Les efforts sont ainsi appliqués de façon parfaitement tangentielle, sans aucune composante radiale (c'est-à-dire projetée sur un axe radial par rapport à l'axe longitudinal). Ceci permet d'éviter ou de limiter les phénomènes d' « écrasement » voire de blocage du premier organe pendant les phases de montage ou de démontage. Ces phénomènes sont en outre susceptibles d'être amplifiés par une augmentation du coefficient de friction des matériaux suite à une pollution et/ou à une corrosion générées après des cycles de fonctionnement à hautes températures. En outre les efforts sont exercés au plus loin de l'axe longitudinal, ce qui permet de transmettre un couple plus important tout en évitant ou en limitant les phénomènes « d'écrasement ».

Selon encore d'autres caractéristiques avantageuses de l'invention, le secteur angulaire a un angle compris entre 10 et 45°, notamment 30°.

Selon d'autres caractéristiques avantageuses de l'invention, la hauteur radiale des reliefs par rapport à l'axe longitudinale est supérieure à 1 mm, et est en particulier comprise entre 1 et 5 mm.

Selon d'autres caractéristiques avantageuses de l'invention, le premier organe est mobile par rapport au corps central suivant l'axe longitudinal, entre le second organe et un fond intérieur de la jupe, le premier organe étant repoussé vers le second organe par des moyens de rappel élastique logés dans la jupe.

Selon d'autres caractéristiques avantageuses de l'invention, le corps central comporte un arrêt axial contre lequel le second organe est en butée sous la contrainte du premier organe repoussé par les moyens de rappel élastique.

Selon d'autres caractéristiques avantageuses de l'invention, l'arrêt axial est constitué par une collerette usinée sur le corps central.

Selon d'autres caractéristiques avantageuses de l'invention, les moyens de rappel élastique sont constitués d'un ressort de compression ondulé à fil plat.

Selon d'autres caractéristiques avantageuses de l'invention, le premier organe et le second organe ont des formes générales annulaires, le second organe comprenant en outre une protubérance s'étendant radialement par rapport à l'axe longitudinal, cette protubérance portant un ergot d'immobilisation dirigé parallèlement à l'axe longitudinal, destiné à pénétrer dans un orifice d'immobilisation correspondant conformé dans le carter.

Selon d'autres caractéristiques avantageuses de l'invention, le premier organe et le second organe comportent des dentures respectives destinées à s'interpénétrer mutuellement lors du vissage / dévissage.

Selon d'autres caractéristiques avantageuses de l'invention les dentures ont des dents à profil symétrique, dont les faces latérales sont inclinées notamment à 30° / 30°.

Selon d'autres caractéristiques avantageuses de l'invention les dentures ont un profil asymétrique, dont les faces latérales sont orientées notamment à 30° / 60°.

Selon d'autres caractéristiques avantageuses de l'invention, dans un premier mode de réalisation le corps central comporte une conformation de prise en rotation pour l'entraînement en rotation à l'aide d'un outil de vissage/dévissage. Cette solution présente l'avantage d'une mise en oeuvre facile et économique.

Selon encore d'autres caractéristiques avantageuses de l'invention, la jupe comporte une conformation de prise en rotation pour l'entraînement en rotation à l'aide d'un outil de vissage/dévissage. Cette solution présente l'avantage de permettre la réalisation d'un dispositif d'obturation plus compact. Cette solution présente également pour avantage de permettre une plus grande conformation de prise en rotation pour un même encombrement du bouchon, et donc également de permettre la réalisation de bouchons plus petits avec une même conformation de prise en rotation.

Selon d'autres caractéristiques de l'invention, lorsque la jupe comporte une conformation de prise en rotation, la jupe est prolongée du côté opposé au filetage au-delà du corps central et définit la conformation de prise à son intérieur au-delà du corps central.

D'autres particularités et avantages de l'invention ressortiront encore de la description ci-après, relative à des exemples non limitatifs de l'invention, et à la lumière des dessins annexés sur lesquels:
- la figure 1 est une vue en coupe d'un premier mode de réalisation d'un dispositif d'obturation selon l'invention ;
- la figure 2 est une vue en coupe du dispositif de la figure 1 selon la ligne de coupe D-D ;
- la figure 3 est une vue agrandie d'un détail de réalisation E du dispositif d'obturation selon l'invention tel qu'illustré à la figure 4 ;
- la figure 4 est une vue extérieure du dispositif d'obturation selon l'invention, tel qu'il apparaît suivant la vue F de la figure 1 ; et
- la figure 5 est une vue en coupe d'un deuxième mode de réalisation d'un dispositif d'obturation selon l'invention.

Ces modes de réalisation n'étant nullement limitatifs, on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

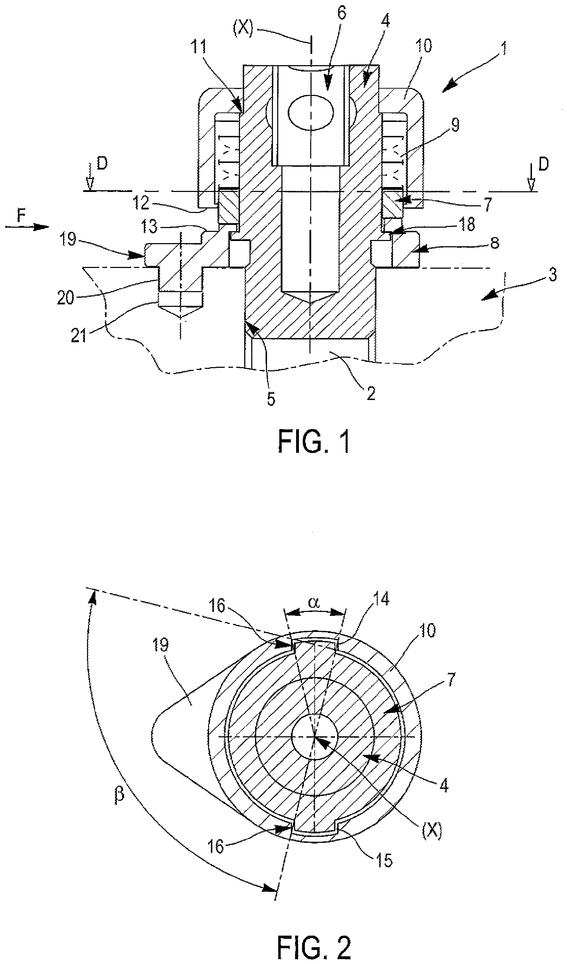

On va tout d'abord décrire, en référence aux figures 1 à 4, un premier mode de réalisation de l'invention.

Selon l'invention, le dispositif d'obturation comporte un bouchon 1 destiné à être placé sur un orifice fileté 2 d'un carter 3, ou à en être enlevé, respectivement par vissage et dévissage. Par exemple, l'orifice fileté 2 est formé dans un bossage du carter 3 d'un moteur. Les filetages sont standard et en particulier ne comportent aucune interruption du genre rainure axiale ou méplat. Le bouchon 1 comprend un corps central 4 ayant la forme générale d'un axe pourvu à une extrémité d'un filetage 5, et à une extrémité opposée d'une empreinte ou conformation 6 de prise de rotation pour l'entraînement en rotation du corps central 4 à l'aide d'un outil de vissage / dévissage (non représenté). Dans l'exemple illustré, la conformation de prise de rotation est une partie femelle à 4 pans destinée à recevoir une clé de vissage et de dévissage mâle correspondante à 4 pans. Alternativement et de manière non représentée, la conformation de prise en rotation peut être une partie femelle à 6 pans destinée à recevoir une clé de vissage et de dévissage mâle correspondante à 6 pans. Un couple de serrage prédéterminé peut être assuré grâce à l'emploi d'une clef dynamométrique. Dans une variante non illustrée, on peut prévoir que cette partie soit remplacée par une conformation mâle sur l'extérieur du corps central 1.

Le bouchon 1 comprend également des moyens de verrouillage et de déverrouillage s'opposant au dévissage spontané du bouchon 1, activés automatiquement par la rotation du bouchon 1 et sa progression correspondante dans la direction de vissage suivant un axe longitudinal (X). Ainsi, lors du mouvement du bouchon vers la position de fermeture et à partir de celle-ci, les moyens de verrouillage et de déverrouillage respectifs sont mis progressivement en action, de manière concomitante avec le mouvement, sans qu'il y ait d'intervention de l'opérateur. Les moyens de verrouillage et de déverrouillage comprennent deux organes d'accouplement libérable : un premier organe 7 est accouplé en rotation avec le bouchon 1 et un second organe 8 est immobilisable en rotation par rapport au carter 3 lors du vissage. De préférence, ces moyens d'accouplement sont du type à encliquetage réversible. Par "encliquetage réversible" on entend un encliquetage pouvant être libéré par application d'un effort suffisant sur le bouchon dans le sens du dévissage ou du dévissage.

De manière particulièrement avantageuse, le verrouillage et le déverrouillage sont assurés par des moyens de verrouillage et de déverrouillage, plus précisément par des organes d'accouplement libérable comportant un premier organe 7 accouplé en rotation avec le corps central 4 du bouchon 1 et un second organe 8 apte à être immobilisé en rotation par rapport au carter 3 lors du vissage du corps central 4 dans l'orifice 2 du carter 3. Ces moyens de verrouillage et de déverrouillage sont agencés autour du corps central 4.

Le premier et le second organes 7, 8 comportent chacun un profil dentelé dirigé vers l'organe opposé. Les dents sont précisément conformées sur des faces annulaires respectives du premier 7 et du second 8 organes en vis-à-vis l'une de l'autre. Afin d'éviter le desserrage parasite par vibrations et permettre le desserrage volontaire du bouchon par l'opérateur, le profil dentelé du premier organe 7 est appliqué par un ressort 9 contre le profil dentelé identique du second organe 8. Il en résulte une interpénétration des dentures qui s'oppose à la rotation spontanée du bouchon 1.

De plus, l'opérateur lors du montage ou du démontage sent cliqueter le dispositif, et peut donc être rassuré sur le bon fonctionnement du système de verrouillage.

De manière remarquable, le premier et le second organes 7, 8 sont tous deux embarqués sur le bouchon et inséparables de ce dernier.

Le bouchon 1 comporte une jupe 10 de protection cylindrique rigidement liée au corps central 4. Cette jupe 10 est typiquement montée en force / sertie sur le corps central 4 par son extrémité comportant la conformation de prise de rotation 6, jusqu'à un épaulement 11 de positionnement et de blocage conformé sur la périphérie extérieure du corps central 4. Le terme « rigidement lié » signifie un encastrement parfait de la jupe sur le corps central, sans aucun degré de liberté. Dans une variante de réalisation non illustrée de l'invention, la jupe peut également être soudée sur le corps central.

La jupe comporte une zone d'appui 12 apte à coopérer directement en appui avec une zone d'appui 13 correspondante du second organe 8. Le premier organe 7 est accouplé en rotation avec la jupe 10 via des moyens de guidage 14, 15 conformés en périphérie du premier organe 7 qui s'étendent radialement par rapport à l'axe longitudinal X. Ces moyens de guidage 14, 15 pénètrent dans des rainures 16 de forme conjuguée conformées à l'intérieur de la jupe 10. Les rainures 16 s'étendent suivant l'axe longitudinal X de manière à permettre le déplacement du premier organe 7 à l'intérieur de la jupe, suivant l'axe longitudinal X. En conséquence, le premier organe 7 est également désigné « pièce mobile » ou « coupelle mobile » en raison de son degré de liberté suivant l'axe X. On note que le premier organe 7 a la forme générale d'une coupelle, ou d'une bague, ou d'un anneau.

Les moyens de guidage 14, 15 sont constitués d'au moins deux reliefs angulairement répartis à la périphérie du premier organe 7, chaque relief étant délimité, d'une part radialement par un profil cylindrique extérieur de diamètre supérieur à la surface cylindrique extérieure du premier organe 7, et d'autre part angulairement par des bords longitudinaux inscrits dans des plans formant un secteur angulaire autour de l'axe longitudinal X. Ce secteur angulaire délimitant les reliefs des moyens de guidage a un angle α typiquement compris entre 10 et 45°, par exemple 30° comme illustré à la figure 2. La hauteur de ces reliefs, considérée radialement par rapport à l'axe longitudinal X est de préférence supérieure à 1 mm, et est par exemple comprise entre 1 et 5 mm. Les efforts transmis de la jupe 10 à ces moyens de guidage 14, 15 (en agissant sur l'axe central 4 lors du vissage ou dévissage) sont très avantageusement dirigés suivant des tangentes au premier organe 7, de sorte qu'aucune composante radiale n'est induite lors du vissage / dévissage. Dans l'exemple illustré à la figure 2, on a prévu deux moyens de guidage diamétralement opposés. Dans ce cas, on observe un angle β typiquement de 90° entre les bords longitudinaux directement sollicités soit au vissage, soit au dévissage. Dans des variantes de réalisation non illustrées de l'invention, on peut prévoir plus de deux moyens de guidage, par exemple trois moyens de guidage répartis angulairement autour de l'axe longitudinal X.

Selon l'invention, le premier organe 7 est mobile en translation par rapport au corps central 4 entre le second organe 8 et un fond intérieur de la jupe 10, le premier organe 7 étant repoussé vers le second organe 8, vers l'ouverture de la jupe 10, à l'opposé du fond intérieur, sous l'influence d'un ressort 9 situé autour du corps central 4. Le corps central 4 comporte un arrêt axial 18 contre lequel le second organe 8 coopère en butée sous la contrainte du premier organe repoussé par le ressort 9. Dans l'exemple illustré, cet arrêt axial 18 est constitué d'une collerette usinée en périphérie du corps central 4, contre laquelle un épaulement intérieur du second organe 8 vient s'appuyer. Dans une variante non illustrée, on peut prévoir que la collerette soit remplacée par un anneau élastique.

Le second organe 8 est libre en rotation par rapport au corps central 4. Il est en revanche immobilisable en rotation par rapport au carter 3 lors du vissage. Le second organe 8 a une forme générale annulaire. Il comporte une protubérance 19 s'étendant radialement par rapport à l'axe longitudinal X. Cette protubérance 19 porte un ergot d'immobilisation 20 dirigé parallèlement à l'axe longitudinal X. L'ergot 20 est destiné à pénétrer dans un orifice d'immobilisation 21 correspondant conformé dans le carter 3.

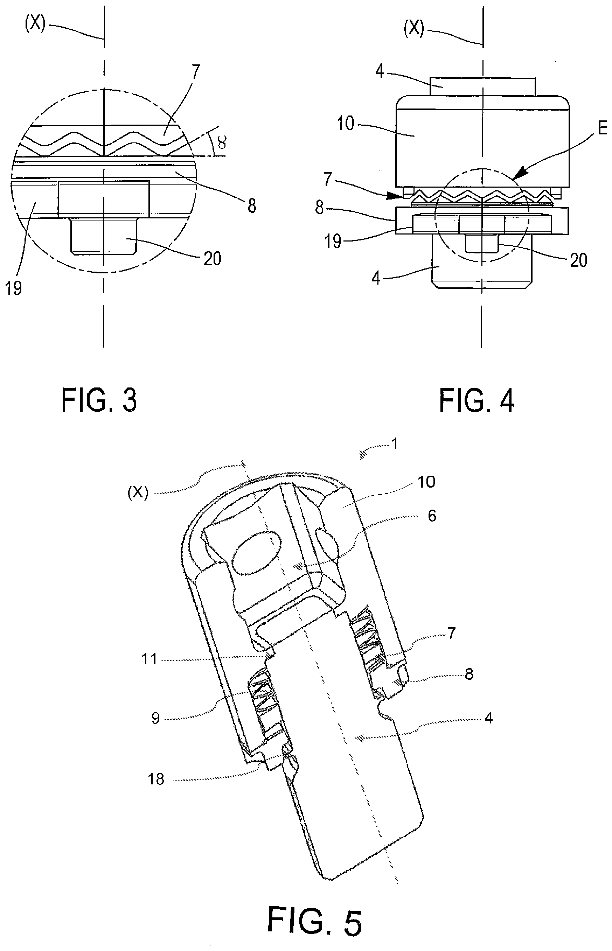

Lors du vissage du corps central 4 dans l'orifice fileté 2, le second organe 8 suit dans un premier temps le mouvement rotatif du bouchon 1. Lorsque le vissage a atteint un certain stade, l'ergot entre en contact avec la surface extérieure du carter 3, tout en tournant, jusqu'à se retrouver au droit de l'orifice d'immobilisation 21. Toute progression supplémentaire du bouchon suivant l'axe longitudinal X lors du vissage provoque une avancée correspondante de l'ergot dans l'orifice de blocage, jusqu'à ce que le second organe 8 épouse la surface extérieure du carter 3. Une progression supplémentaire du corps central 4 vers le carter suivant l'axe longitudinal X lors du vissage amène les dentures respectives des premier 7 et second 8 organes à s'interpénétrer par intermittence. En effet, le groupe de dents (ou denture) du premier organe 7 est entraîné en rotation avec le bouchon tandis que le groupe de dents (ou denture) du second organe 8 est à ce stade immobilisé en rotation par rapport au carter 3. Au cours de la rotation relative entre les deux groupes de dents, ces dernières se trouvent alternativement dans une configuration d'interpénétration et une configuration pointe contre pointe, le passage d'une configuration à l'autre étant réalisé par glissement relatif des faces adjacentes respectives des deux groupes de dents. Le premier organe 7 effectue de ce fait des translations suivant l'axe longitudinal X, à l'intérieur de la jupe 10, vers l'arrière (empreinte 6) et vers l'avant (orifice fileté 2) au cours du vissage du bouchon, ce qui s'apparente à un mouvement d'oscillation. Chaque translation est réalisée sur une course correspondant à la hauteur des dents, distance séparant la pointe d'une dent du creux entre deux dents, en projection suivant l'axe longitudinal X. Notons que les dents ont de préférence un profil symétrique, c'est-à-dire des inclinaisons identiques des surfaces de glissement agissant au serrage ou au desserrage, afin d'optimiser la durée de vie du système et de mieux contrôler les coefficients de frottement. Un profil de dent symétrique adapté a par exemple des inclinaisons de 30° / 30° de part et d'autre de chaque dent. Ces angles y sont considérés par rapport à un plan perpendiculaire à l'axe longitudinal X (figure 3). Dans un autre mode de réalisation non représenté, les dentures peuvent avoir un profil asymétrique, notamment pour offrir un coefficient de frottement plus important dans un sens que dans l'autre. Un profil de dent asymétrique adapté a par exemple des inclinaisons de 30° / 60° de part et d'autre de chaque dent.

Le ressort 9 est de préférence un ressort de compression ondulé à fil plat. Un tel ressort présente un encombrement très réduit et permet d'alléger considérablement le bouchon, en comparaison d'un bouchon analogue pourvu d'un ressort hélicoïdal de compression.

Le bouchon est assemblé comme suit : les éléments sont placés sur le corps central par son extrémité arrière, située du côté de l'empreinte ou conformation de prise de rotation 6. Le second organe 8 est placé en premier autour du corps central 4. Le premier organe 7 est placé ensuite autour du corps central 4 et empilé sur le second organe 8, denture contre denture. Le ressort 9 est ensuite placé autour du corps central et appliqué contre le premier organe 7. La jupe 10 de protection est ensuite fixée en force ou sertie autour du corps central et de ces éléments 8, 7, 9. La jupe 10 assure en même temps la protection en constituant l'enveloppe extérieure du bouchon et l'accouplement rotatif (ou entraînement) entre le corps central 4 et le premier organe 7. On note que le premier organe et le second organe ont des formes extérieures très compactes, notamment suivant la direction de l'axe longitudinal X. Leur épaisseur dans cette direction peut être inférieure à 10-15 mm. Par exemple, le premier organe peut avoir une épaisseur comprise entre 5 et 10 mm. Ces exemples ne sont nullement limitatifs. Le type de ressort utilisé, la compacité des premier et second organes ainsi que les moyens d'entraînement rotatif retenus entre le premier organe et la jupe confèrent au bouchon un poids et un encombrement particulièrement réduits, susceptibles de satisfaire à des contraintes très sévères.

On va maintenant décrire, en référence à la figure 5, un deuxième mode de réalisation de l'invention, mais seulement en ce qu'il diffère du premier mode de réalisation précédemment décrit.

La jupe 10 comporte une conformation 6 de prise en rotation pour l'entraînement en rotation à l'aide d'un outil de vissage/dévissage. La conformation 6 est formée au centre de la jupe 10 selon l'axe longitudinal (X) de la jupe. Dans l'exemple illustré, la conformation de prise de rotation est une partie femelle à 4 pans destinée à recevoir une clé de vissage et de dévissage mâle correspondante à 4 pans.

Dans l'exemple représenté, du côté opposé au filetage du corps central 4, la jupe est prolongée au-delà de l'extrémité du corps central 4. La partie de jupe qui dépasse ainsi du corps central 4 comporte une paroi radialement intérieure non circulaire qui définit la conformation de prise en rotation 6. Avantageusement, le fond de la conformation de prise en rotation est hermétiquement fermé par l'extrémité du corps central 4.

Cette jupe 10 est typiquement montée en force / sertie sur le corps central 4 par l'extrémité longitudinale de la jupe 10 correspondant au fond de la conformation de prise en rotation 6, jusqu'à un épaulement 11 de positionnement et de blocage conformé sur la périphérie extérieure du corps central 4. Typiquement l'épaulement 11 de positionnement et de blocage a une forme géométrique, notamment sensiblement carrée tel que représenté dans l'exemple de la figure 5, qui s'emboîte étroitement sur un profil correspondant du corps central 4. Le terme « rigidement lié » signifie un encastrement parfait de la jupe sur le corps central, sans aucun degré de liberté. Dans une variante de réalisation non illustrée de l'invention, la jupe peut également être soudée sur le corps central.

L'invention n'est pas limitée aux modes de réalisation décrits précédemment et comprend tous les équivalents techniques des moyens présentés.

En particulier, on a indiqué précédemment que l'invention concernait un dispositif d'obturation comprenant un bouchon endoscope, ce dispositif étant destiné à fermer un orifice approprié par lequel on peut accéder à l'intérieur du carter. Le dispositif de l'invention concerne plus généralement tout dispositif d'obturation comprenant un bouchon tel que décrit précédemment, que ce bouchon ait ou non d'autres caractéristiques ou fonctionnalités. Par exemple un tel dispositif d'obturation selon l'invention peut en lui-même constituer un capteur thermique, un capteur vibratoire, un détecteur de particules (chip detector) ou tout autre moyen de détection.

De plus, la jupe 10 telle que décrite précédemment est par exemple rigide, c'est-à-dire indéformable en compression suivant l'axe longitudinal de vissage. La jupe rigide forme une entretoise prenant appui sur la zone d'appui 13 du second organe 8. Dans un autre mode de réalisation de l'invention, la jupe peut à l'inverse être élastique, c'est-à-dire être conformée dans sa structure de manière à être déformable au moins en compression suivant l'axe longitudinal de vissage. A cet effet, elle peut comporter des zones ajourées, fendues, ou plissées permettant sa déformation et son retour dans sa forme initiale après libération des efforts de compression. Une telle jupe élastique optimise encore la sécurité du système en augmentant la réserve élastique lors du serrage. Elle permet également de diminuer les phénomènes de grippage du filetage en limitant / calibrant l'effort de serrage à une valeur prédéterminée.

Par ailleurs, la course du premier organe 7 à l'intérieur de la jupe 10 peut être adaptée au besoin.

## Revendications

1. Dispositif d'obturation comportant un bouchon (1) destiné à être placé sur un orifice fileté (2) d'un carter (3), ou à en être enlevé, respectivement par vissage et dévissage, le bouchon comprenant un corps central (4) portant un filetage (5), et des moyens de verrouillage et de déverrouillage s'opposant au dévissage spontané du bouchon, activés automatiquement par la rotation du bouchon (1) et sa progression correspondante dans la direction de vissage suivant un axe longitudinal (X), les moyens de verrouillage et de déverrouillage comprenant deux organes d'accouplement libérable (7, 8), dont un premier organe (7) est accouplé en rotation avec le corps central (4) et un second organe (8) est immobilisable en rotation par rapport au carter (3) lors du vissage, **caractérisé en ce que** le bouchon (1) comporte une jupe (10) rigidement liée au corps central (4) ayant une zone d'appui (12) apte à coopérer directement avec une zone d'appui (13) correspondante du second organe (8), et **en ce que** le premier organe (7) est accouplé en rotation avec la jupe (10) via des moyens de guidage (14, 15) conformés en périphérie du premier organe (7) et s'étendant radialement par rapport à l'axe longitudinal (X), ces moyens de guidage (14, 15) pénétrant dans des rainures (16) de forme conjuguée conformées à l'intérieur de la jupe (10), qui s'étendent suivant l'axe longitudinal (X) de manière à permettre le déplacement du premier organe (7) à l'intérieur de la jupe (10), suivant l'axe longitudinal (X).

2. Dispositif d'obturation selon la revendication 1, **caractérisé en ce que** les moyens de guidage (14, 15) sont constitués d'au moins deux reliefs angulairement répartis à la périphérie du premier organe, autour de l'axe longitudinal (X), en particulier de façon diamétralement opposée, chaque relief étant délimité, d'une part radialement par un profil cylindrique extérieur de diamètre supérieur à la surface cylindrique extérieure du premier organe (7), et d'autre part angulairement par des bords longitudinaux inscrits dans des plans formant un secteur angulaire autour de l'axe longitudinal (X).

3. Dispositif d'obturation selon la revendication 2, **caractérisé en ce que** le secteur angulaire a un angle compris entre 10 et 45°, notamment 30°.

4. Dispositif d'obturation selon la revendication 2 ou 3 **caractérisé en ce que** la hauteur radiale des reliefs par rapport à l'axe longitudinal (X) est supérieure à 1 mm, et est en particulier comprise entre 1 et 5 mm.

5. Dispositif d'obturation selon l'une quelconque des revendications 2 à 4, **caractérisé en ce que** le premier organe (7) est mobile par rapport au corps central (4) suivant l'axe longitudinal (X), entre le second organe (8) et un fond intérieur de la jupe (10), le premier organe (7) étant repoussé vers le second organe (8) par des moyens de rappel (9) élastique logés dans la jupe (10).

6. Dispositif d'obturation selon la revendication 5, **caractérisé en ce que** le corps central (4) comporte un arrêt axial (18) contre lequel le second organe (8) est en butée sous la contrainte du premier organe (7) repoussé par les moyens de rappel élastique (9).

7. Dispositif d'obturation selon la revendication 6, **caractérisé en ce que** l'arrêt axial (18) est constitué par une collerette usinée sur le corps central (4).

8. Dispositif d'obturation selon l'une quelconque des revendications 5 à 7, **caractérisé en ce que** les moyens de rappel élastique (9) sont constitués d'un ressort de compression ondulé à fil plat.

9. Dispositif d'obturation selon l'une quelconque des revendications 1 à 8, **caractérisé en ce que** le premier organe (7) et le second organe (8) ont des formes générales annulaires, le second organe (8) comprenant en outre une protubérance (19) s'étendant radialement par rapport à l'axe longitudinal (X), cette protubérance portant un ergot d'immobilisation (20) dirigé parallèlement à l'axe longitudinal (X), destiné à pénétrer dans un orifice d'immobilisation (21) correspondant conformé dans le carter (3).

10. Dispositif d'obturation selon l'une quelconque des revendications 1 à 9, **caractérisé en ce que** le premier organe (7) et le second organe (8) comportent des dentures respectives destinées à s'interpénétrer mutuellement lors du vissage / dévissage.

11. Dispositif d'obturation selon la revendication 10, **caractérisé en ce que** les dentures ont des dents à profil symétrique, dont les faces latérales sont inclinées notamment à 30° / 30°.

12. Dispositif d'obturation selon la revendication 10, **caractérisé en ce que** les dentures ont des dents à profil asymétrique, dont les faces latérales sont orientées notamment à 30° / 60°.

13. Dispositif d'obturation selon l'une quelconque des revendications 1 à 12, **caractérisé en ce que** le corps central (4) comporte une conformation (6) de prise en rotation pour l'entraînement en rotation à l'aide d'un outil de vissage/dévissage.

14. Dispositif d'obturation selon l'une quelconque des revendications 1 à 12, **caractérisé en ce que** la jupe (10) comporte une conformation (6) de prise en rotation pour l'entraînement en rotation à l'aide d'un outil de vissage/dévissage.

15. Dispositif d'obturation selon la revendication 14, **caractérisé en ce que** du côté opposé au filetage la jupe est prolongée au-delà du corps central et définit la conformation de prise à son intérieur au-delà du corps central.

## Patentansprüche

1. Verschlussvorrichtung mit einem Stopfen (1), der dazu bestimmt ist, an eine Gewindeöffnung (2) eines Gehäuses (3) durch Anschrauben oder Abschrauben angeordnet bzw. davon entfernt zu werden, wobei der Stopfen einen Mittelkörper (4) mit einem Gewinde (5) und Ver- und Entriegelungsglieder aufweist, die dem spontanen Abschrauben des Stopfens entgegenwirken und durch Drehen des Stopfens (1) und seine entsprechende Fortbewegung in Schraubrichtung entlang einer Längsachse (X) automatisch aktiviert werden, wobei die Ver- und Entriegelungsglieder zwei Kopplungsglieder (7, 8) zur lösbaren Kopplung aufweisen, von denen beim Anschrauben ein erstes Glied (7) mit dem Mittelkörper (4) drehgekoppelt ist und ein zweites Glied (8) gegenüber dem Gehäuse (3) drehfest festlegbar ist, **dadurch gekennzeichnet, dass** der Stopfen (1) eine Schürze (10) aufweist, die starr mit dem Mittelkörper (4) verbunden ist und einen Abstützbereich (12) hat, der unmittelbar mit einem entsprechenden Abstützbereich (13) des zweiten Glieds (8) zusammenwirken kann, und dass das erste Glied (7) mit der Schürze (10) über Führungsorgane (14, 15) drehgekoppelt ist, die am Umfang des ersten Glieds (7) ausgebildet sind und sich radial bezüglich der Längsachse (X) erstrecken, wobei diese Führungsorgane (14, 15) in im Inneren der Schürze (10) mit entsprechender Form ausgebildete Rillen (16) eindringen, die sich entlang der Längsachse (X) so erstrecken, dass sie die Verlagerung des ersten Glieds (7) innerhalb der Schürze (10) entlang der Längsachse (X) gestatten.

2. Verschlussvorrichtung nach Anspruch 1, **dadurch gekennzeichnet, dass** die Führungsorgane (14, 15) aus zumindest zwei Erhebungen bestehen, die am Umfang des ersten Glieds um die Längsachse (X) herum im Winkel verteilt sind, insbesondere diametral entgegengesetzt angeordnet sind, wobei jede Erhebung einerseits radial durch ein zylindrisches Außenprofil, dessen Durchmesser größer als die zylindrische Außenfläche des ersten Glieds (7) ist, und andererseits im Winkel durch Längsränder begrenzt ist, die in Ebenen verlaufen, die einen Winkelsektor um die Längsachse (X) herum bilden.

3. Verschlussvorrichtung nach Anspruch 2, **dadurch gekennzeichnet, dass** der Winkelsektor einen Winkel zwischen 10 und 45°, insbesondere von 30°, aufweist.

4. Verschlussvorrichtung nach Anspruch 2 oder 3, **dadurch gekennzeichnet, dass** die radiale Höhe der Erhebungen bezüglich der Längsachse (X) größer als 1 mm ist und insbesondere zwischen 1 und 5 mm liegt.

5. Verschlussvorrichtung nach einem der Ansprüche 2 bis 4, **dadurch gekennzeichnet, dass** das erste Glied (7) relativ zum Mittelkörper (4) entlang der Längsachse (X) zwischen dem zweiten Glied (8) und einem inneren Boden der Schürze (10) verschiebbar ist, wobei das erste Glied (7) zum zweiten Glied (8) hin über elastische Rückstellmittel (9) verschoben wird, die in der Schürze (10) aufgenommen sind.

6. Verschlussvorrichtung nach Anspruch 5, **dadurch gekennzeichnet, dass** der Mittelkörper (4) eine axiale Arretierung (18) aufweist, an die das zweite Glied (8) unter Vorspannung des durch die elastischen Rückstellmittel (9) verschobenen ersten Glieds (7) anschlägt.

7. Verschlussvorrichtung nach Anspruch 6, **dadurch gekennzeichnet, dass** die axiale Arretierung (18) aus einem am Mittelkörper (4) eingearbeiteten Kragen besteht.

8. Verschlussvorrichtung nach einem der Ansprüche 5 bis 7, **dadurch gekennzeichnet, dass** die elastischen Rückstellmittel (9) aus einer gewellten Druckfeder aus Flachdraht bestehen.

9. Verschlussvorrichtung nach einem der Ansprüche 1 bis 8, **dadurch gekennzeichnet, dass** das erste Glied (7) und das zweite Glied (8) im Wesentlichen ringförmig sind, wobei das zweite Glied (8) ferner einen Vorsprung (19) aufweist, der sich radial bezüglich der Längsachse (X) erstreckt, wobei dieser Vorsprung eine Festlegenase (20) aufweist, die parallel zur Längsachse (X) gerichtet und dazu bestimmt ist, in eine entsprechende im Gehäuse (3) ausgeführte Festlegeöffnung (21) einzudringen.

10. Verschlussvorrichtung nach einem der Ansprüche 1 bis 9, **dadurch gekennzeichnet, dass** das erste Glied (7) und das zweite Glied (8) jeweils Verzahnungen aufweisen, die dazu ausgebildet sind, beim Anschrauben/Abschrauben gegenseitig ineinanderzugreifen.

11. Verschlussvorrichtung nach Anspruch 10, **dadurch gekennzeichnet, dass** die Verzahnungen Zähne mit symmetrischem Profil haben, deren Seitenflächen insbesondere mit 30° / 30° geneigt verlaufen.

12. Verschlussvorrichtung nach Anspruch 10, **dadurch gekennzeichnet, dass** die Verzahnungen Zähne mit asymmetrischem Profil haben, deren Seitenflächen insbesondere mit 30° / 60° ausgerichtet sind.

13. Verschlussvorrichtung nach einem der Ansprüche 1 bis 12, **dadurch gekennzeichnet, dass** der Mittelkörper (4) eine Dreheingriffsausformung (6) zur Drehmitnahme mit Hilfe eines Werkzeugs zum Anschrauben/Abschrauben aufweist.

14. Verschlussvorrichtung nach einem der Ansprüche 1 bis 12, **dadurch gekennzeichnet, dass** die Schürze (10) eine Dreheingriffsausformung (6) zur Drehmitnahme mit Hilfe eines Werkzeugs zum Anschrauben/Abschrauben aufweist.

15. Verschlussvorrichtung nach Anspruch 14, **dadurch gekennzeichnet, dass** auf der dem Gewinde entgegengesetzten Seite die Schürze jenseits des Mittelkörpers verlängert ist und in ihrem Inneren die Eingriffsausformung jenseits des Mittelkörpers definiert.

## Claims

1. Sealing device comprising a plug (1) intended to be placed in a threaded hole (2) in a case (3), or removed therefrom, respectively by screwing and unscrewing, the plug comprising a central body (4) provided with a screw thread (5), and locking and unlocking means opposing the spontaneous unscrewing of the plug, activated automatically by the rotation of the plug (1) and its corresponding movement in the direction of screwing along a longitudinal axis (X), the locking and unlocking means comprising two releasable coupling components (7, 8), a first component (7) of which is coupled in rotation with the central body (4) and a second component (8) of which can be immobilized in rotation with respect to the case (3) during screwing, **characterized in that** the plug (1) comprises a skirt (10) rigidly connected to the central body (4) and having a bearing zone (12) capable of cooperating directly with a corresponding bearing zone (13) of the second component (8), and **in that** the first component (7) is coupled in rotation with the skirt (10) via guide means (14, 15) configured on the periphery of the first component (7) and extending radially with respect to the longitudinal axis (X), said guide means (14, 15) entering mutually corresponding grooves (16) configured inside the skirt (10), which extend along the longitudinal axis (X) so as to allow the displacement of the first component (7) inside the skirt (10), along the longitudinal axis (X).

2. Sealing device according to claim 1, **characterized in that** the guide means (14, 15) are constituted by at least two protrusions angularly distributed on the periphery of the first component, about the longitudinal axis (X), in particular in a diametrically opposed manner, each protrusion being delimited, on the one hand radially by a cylindrical outer profile having a diameter greater than the outer cylindrical surface of the first component (7), and on the other hand angularly by longitudinal edges inscribed within planes forming an angular sector about the longitudinal axis (X).

3. Sealing device according to claim 2, **characterized in that** the angular sector has an angle comprised between 10 and 45°, particularly 30°.

4. Sealing device according to claim 2 or 3, **characterized in that** the radial height of the protrusions with respect to the longitudinal axis (X) is greater than 1 mm, and is in particular comprised between 1 and 5 mm.

5. Sealing device according to any one of claims 2 to 4, **characterized in that** the first component (7) is movable with respect to the central body (4) along the longitudinal axis (X), between the second component (8) and an inner base of the skirt (10), the first component (7) being urged towards the second component (8) by resilient return means (9) housed in the skirt (10).

6. Sealing device according to claim 5, **characterized in that** the central body (4) comprises an axial stop (18) against which the second component (8) abuts under the force of the first component (7) urged by the resilient return means (9).

7. Sealing device according to claim 6, **characterized in that** the axial stop (18) is constituted by a collar machined on the central body (4).

8. Sealing device according to any one of claims 5 to 7, **characterized in that** the resilient return means (9) are constituted by a flat wire wave compression spring.

9. Sealing device according to any one of claims 1 to 8, **characterized in that** the first component (7) and the second component (8) have generally annular shapes, the second component (8) also comprising a projection (19) extending radially with respect to the longitudinal axis (X), said projection carrying an immobilization lug (20) directed parallel to the longitudinal axis (X), intended to enter a corresponding immobilization hole (21) configured in the case (3).

10. Sealing device according to any one of claims 1 to 9, **characterized in that** the first component (7) and the second component (8) comprise respective sets of teeth intended to mesh together during screwing/unscrewing.

11. Sealing device according to claim 10, **characterized in that** the sets of teeth have teeth with a symmetrical profile, the lateral faces of which are inclined particularly at 30°/30°.

12. Sealing device according to claim 10, **characterized in that** the sets of teeth have teeth with an asymmetrical profile, the lateral faces of which are inclined particularly at 30°/60°.

13. Sealing device according to any one of claims 1 to 12, **characterized in that** the central body (4) comprises a rotary drive configuration (6) for driving in rotation using a tool for screwing/unscrewing.

14. Sealing device according to any one of claims 1 to 12, **characterized in that** the skirt (10) comprises a rotary drive configuration (6) for driving in rotation using a tool for screwing/unscrewing.

15. Sealing device according to claim 14, **characterized in that** the skirt is extended beyond the central body on the side remote from the screw thread and defines the drive configuration inside the skirt beyond the central body.
